# EUROPEAN PATENT SPECIFICATION

(11) **EP 3 487 194 B1**
(45) Date of publication and mention of the grant of the patent: **01.07.2020**
(21) Application number: 18210565.0
(22) Date of filing: 27.02.2012
(51) Int. Cl.: H04W 4/16, H04M 1/725, G06F 3/0488, H04M 3/428

(54) **METHOD AND APPARATUS PERTAINING TO MULTIPLE-CALL PROCESSING**
VERFAHREN UND VORRICHTUNG IN ZUSAMMENHANG MIT DER VERARBEITUNG VON MEHRFACHANRUFEN
PROCÉDÉ ET APPAREIL POUR LE TRAITEMENT DE PLUSIEURS APPELS

(43) Date of publication of application: 22.05.2019
(62) Divisional of application: 17186856.5
(73) Proprietor: BlackBerry Limited, Waterloo, Ontario N2K 0A7 (CA)
(72) Inventor: GREISSON, Eric, 21140 Malmo (SE)
(74) Representative: Hanna Moore + Curley

(56) References cited:
- US-A1- 2008 168 361
- US-A1- 2009 054 107

## Description

### Field of Technology

The present disclosure relates to communications devices and more particularly to multi-call functionality.

### Background

Two-way communications devices are well known in the art. This includes a wide variety of wireless portable communications devices. Many of these devices facilitate the making of a two-way call (such as, for example, a voice communication between a calling party and a called party). In some cases, some of these devices are able to simultaneously support two separate calls. In many such cases one of the calls is active (such that both the calling party and the called party can currently communicate with one another) while the other call is on hold (such that the respective devices and communications infrastructure maintain the call connection but the calling party and the called party cannot presently communicate with one another).

Establishing a second call while currently engaged in a first call and without dropping or otherwise terminating that first call often includes providing the calling party with a variety of options (regarding, for example, various ways to identify the party to call for that second call). The extent of these options and/or the process of initiating this second call are sometimes considerable. The corresponding cognitive loading for the user can be such that the user may forget or otherwise become confused or uncertain regarding pertinent details of the first call.

US2008/168361 discloses a method at a portable device with a touch screen display, including: displaying a phone call user interface on the touch screen display, wherein the phone call user interface includes: a first informational item associated with an active phone call between a user of the device and a first party, a second informational item associated with a suspended phone call between the user and a second party, and a merge call icon; upon detecting a user selection of the merge call icon, merging the active phone call and the suspended phone call into a conference call between the user, the first party, and the second party, and replacing the phone call user interface with a conference call user interface.

US2009/054107 discloses a handheld communication device having a touch screen interface comprising a proximity sensor adapted to detect object motion in a sensing region, a display screen overlapping the sensing region, and a processor. The handheld device is configured to display representations of calls on the display screen, and initiate conference calls responsive to sensed object motion beginning at a first call representation and continuing toward a second call representation.

Improvements in devices that support multiple simultaneous calls are desirable.

### Summary

According to aspects of the presented disclosure, there are provided an apparatus, method and non-transitory computer storage medium according to the attached claims.

### Brief Description of the Drawings

FIG. 1 is a block diagram in accordance with the disclosure.
FIG. 2 is a perspective view in accordance with the disclosure.
FIG. 3 is a flow diagram in accordance with the disclosure.
FIG. 4 is a top plan view in accordance with the disclosure.
FIG. 5 is a top plan view in accordance with the disclosure.
FIG. 6 is a top plan view in accordance with the disclosure.
FIG. 7 is a top plan view in accordance with the disclosure.
FIG. 8 is a top plan view in accordance with the disclosure.

### Detailed Description

The following describes an apparatus and method pertaining to a control circuit that, during a call via a wireless transceiver with a first party, permits a user to establish a call via the wireless transceiver with a second party different than the call with the first party and then displays via the touch-screen display a user-selectable option to return to the call with the first party. This user-selectable option comprises, at least in part, a moniker for the first party. The control circuit may obtain this moniker by accessing a contacts list. This user-selectable option is colored with a color that contrasts with other displayed proximal colors then presently displayed on the touch-screen display in order to highlight the user-selectable option's availability.

So configured, the control circuit provides an accurate reminder of both how to return to a previous call with a first party as well as merge the a current call with a second party with the call with the first party. These teachings are readily applied in conjunction with existing multi-call functionality practices and hence can serve to significantly leverage the continued viability and utility of those practices. These teachings are also highly scalable in practice and can be extended to include, for example, a plurality of present calls, a plurality of call-connection methodologies, and so forth. The approaches disclosed herein are also readily and economically deployed.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

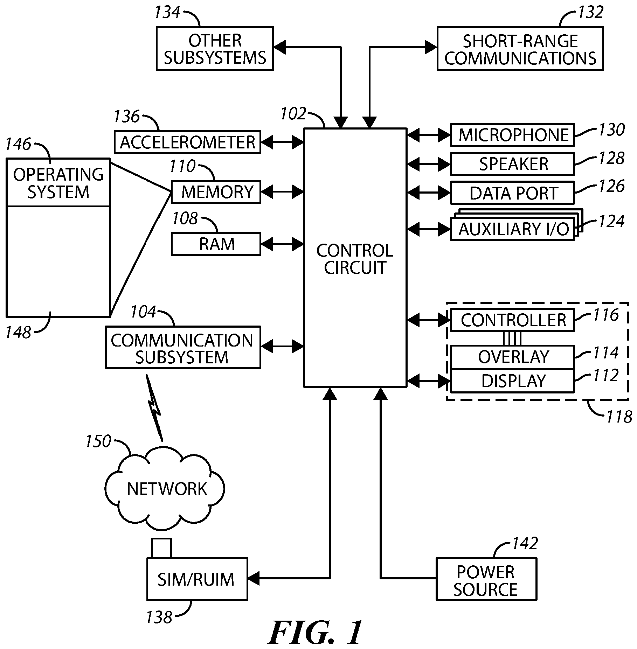

Referring to FIG. 1, an exemplary portable electronic device includes a control circuit 102 (such as a properly programmed processor) that controls the overall operation of the portable electronic device. Communication functions, including data and voice communications, are performed through a communication subsystem 104. The communication subsystem receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device.

The control circuit 102 interacts with other elements, such as a Random Access Memory (RAM) 108, a memory 110, a display 112 with a touch-sensitive overlay 114 operably coupled to an electronic controller 116 that together comprise an optional touch-sensitive display 118 (sometimes referred to herein as a touch-screen display), an auxiliary input/output (I/O) subsystem 124 (which might comprise, for example, a physical keyboard such as a full QWERTY keyboard), a data port 126, a speaker 128, a microphone 130, a short-range communication subsystem 132 (such as, for example, a Bluetooth-based short-range communication subsystem), and other device subsystems 134 of choice.

One or more user interfaces are provided. Input via a graphical user interface is provided via the touch-sensitive overlay 114. The control circuit 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the control circuit 102.

The control circuit 102 may interact with an accelerometer 136 that may be utilized to detect direction of gravitational forces or gravity-induced reaction forces.

To identify a subscriber for network access, the portable electronic device may utilize a Subscriber Identity Module or a Removable User Identity Module (SIM/RUIM) card 138 for communication with a network, such as the wireless network 150. Alternatively, user identification information may be programmed into the memory 110.

The portable electronic device includes an operating system 146 and software programs, applications, or components 148 that are executed by the control circuit 102 and are typically stored in a persistent, updatable store such as the memory 110. Additional applications or programs may be loaded onto the portable electronic device through the wireless network 150, the auxiliary I/O subsystem 124, the data port 126, the short-range communications subsystem 132, or any other suitable subsystem 134. The memory 110 may comprise a non-transitory storage media that stores executable code that, when executed, causes the control circuit 102 to carry out one or more of the functions or actions described herein.

A received signal such as a text message, an e-mail message, or web page download is processed by the communication subsystem and input to the control circuit 102. The control circuit 102 processes the received signal for output to the display 112 and/or to the auxiliary I/O subsystem 124. A subscriber may generate data items, for example e-mail messages, that may be transmitted over the wireless network 150 through the communication subsystem. For voice communications, the overall operation of the portable electronic device is similar. The speaker 128 outputs audible information converted from electrical signals and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. One or more touches, also known as touch contacts, touch events, or sometimes gestures may be detected by the touch-sensitive display 118. The control circuit 102 may determine attributes of the touch, including a location, direction, and/or extent of a touch. Touch location data may include data for an area of contact or data for a single point of contact, such as a point at or near a center of the area of contact.

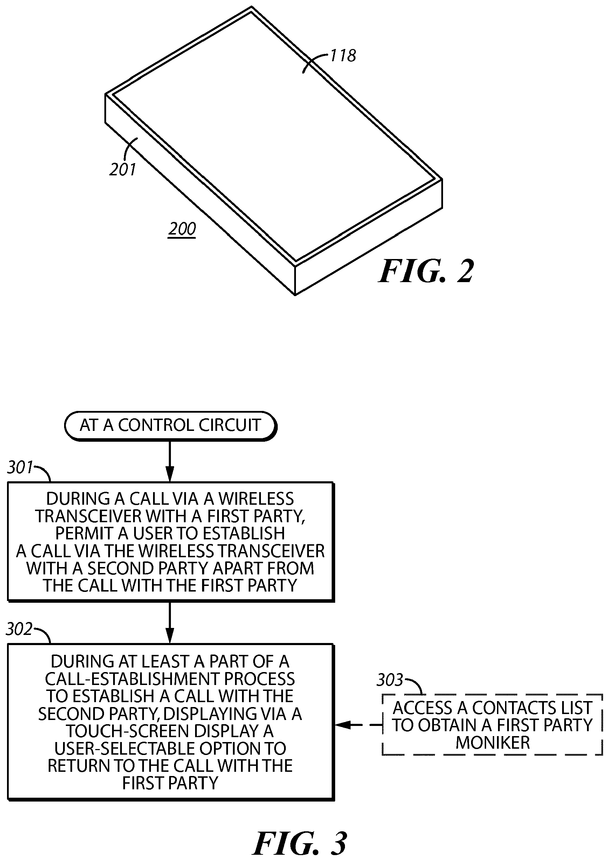

Referring to FIG. 2, for the sake of illustration but without intending any limitations in these regards, the following description will presume that the portable electronic device comprises a portable two-way wireless communications device 200 such as a so-called smartphone. Such a device 200 often comprises a housing 201 to contain the foregoing components including the aforementioned touch-screen display 118.

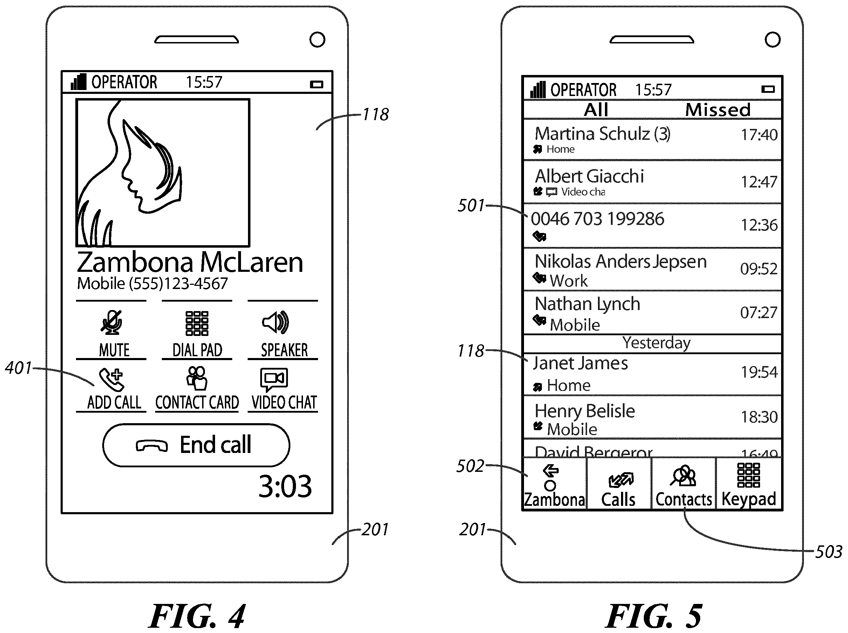

Referring to FIG. 3 and FIG. 4, the control circuit 102, during a first call via a wireless transceiver (such as the above-described communication subsystem 104) with a first party (in this illustrated example named "Zambona McLaren"), permits 301 a user to establish a second call via the wireless transceiver with a second party apart from the call with the first party. As illustrated in FIG. 4, the control circuit 102 can facilitate this capability via provision of an ADD CALL 401 button on the touch-screen display 118.

In response to the user selecting this add-call option, and during at least a part of a call-establishment process to establish a call with the second party, the control circuit 102 displays 302 via the touch-screen display 118 a user-selectable option to return to the first call with the first party.

In this illustrative example, when the user asserts the ADD CALL icon 401 the control circuit 102 provides a list 501, in chronological order, of incoming and outgoing calls as shown in FIG. 5. So configured, the user can select one of these somewhat-recent calls and the corresponding contact information for that selected call is then used to make the second call.

In this case, the aforementioned user-selectable option comprises an icon 502 that includes a "return" arrow. This icon 502 also includes, in this example, a moniker for the first party (here, "Zambona"). This moniker can be retrieved, for example, by having the control circuit 102 access a contacts list (as stored, for example, in the aforementioned memory 110). (As used herein, the term "moniker" will be understood to refer to an identifier for a calling/called party and can comprise a part or all of the party's legal name and/or an alias, nickname, or the like as desired.)

If desired, this icon (including, for example, the moniker) can be colored a color that contrasts with other proximal colors then presently displayed on the touch-screen display 118 in order to highlight the user-selectable option's availability. For example, both the moniker and the arrow in the illustrated icon 502 can be colored a uniform dark green (presuming that such a color is not otherwise within some given distance of the icon 502, such as, for example, 0.25 inch, 0.50 inch, 1.0 inch, or other distance of choice).

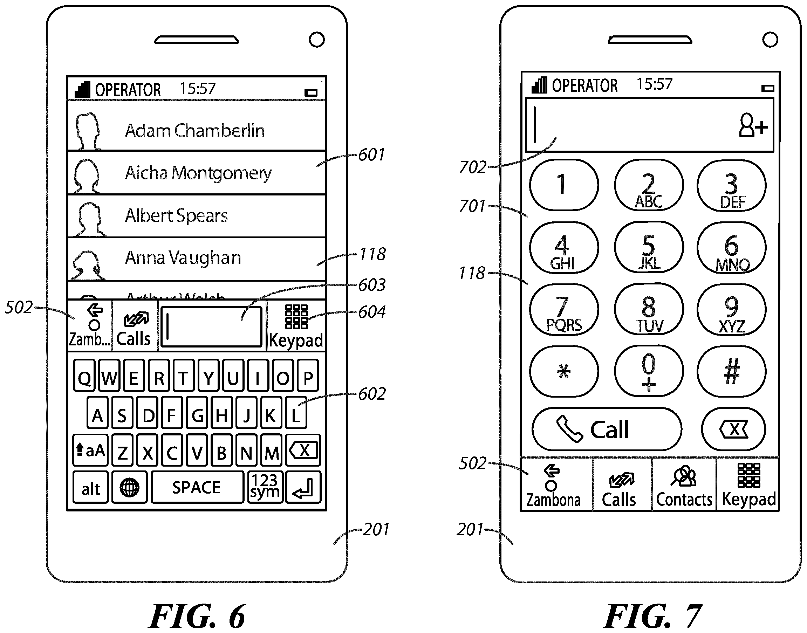

It is of course possible that the party the user wishes to call does not appear in the recent-calls list 501. To accommodate such a circumstance, the user can select a "CONTACTS" icon 503 to access a contacts list 601 as shown in FIG. 6. By one approach this can include providing the user with a virtual keyboard 602 that the user can utilize to enter a search expression into a corresponding contacts-list search field 603.

This process will support again displaying on the touch-screen display 118 the aforementioned user-selectable option to return to the call with the first party. This can comprise, as illustrated here, including the aforementioned icon 502 as a part of the virtual keyboard 602. As illustrated, these teachings will accommodate the control circuit 102 automatically abridging, truncating, or otherwise shortening a moniker that is too long to suitably accommodate in the space available for this icon 502.

It is also possible that the number the user wishes to call is not already included in this contact list 601. To accommodate such a circumstance the user can select a KEPYAD icon 604 to bring up a telephone-dialing keypad 701 as shown in FIG. 7. The user can assert the keys of this keypad 701 to enter the desired telephone number into a corresponding entry field 702.

And again, this process will support displaying on the touch-screen display 118 the aforementioned user-selectable option to return to the call with the first party by including the aforementioned return icon 502 as an available option.

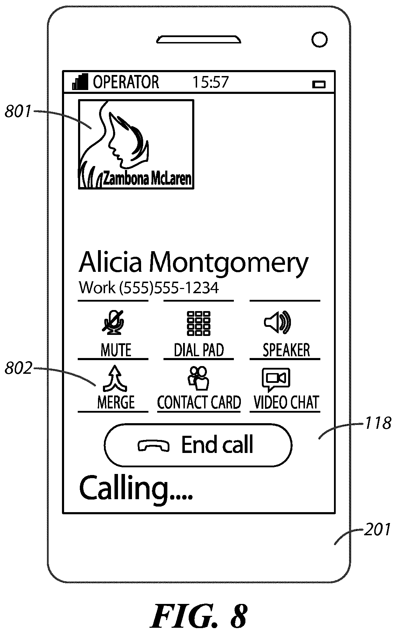

When the user concludes the call-establishment process and begins the second call, the control circuit 102 can provide a display such as that illustrated in FIG. 8 . Here, the control circuit 102 can provide a less-abridged identifier 801 for the first caller. If desired, this identifier 801 can be active; in such a case the user can assert the identifier 801 to place the second call on hold and to return to the first call. If desired, the control circuit 102 can also provide a MERGE icon 802. By selecting the MERGE icon 802 the control circuit 102 will combine the first call and the second call as a conference call.

So configured, and even as the user may traverse a series of different screens as part of the call-establishment process to establish a call with the second party, a single, consistent, simple, and intuitive user-selectable option remains available to the user. By including a moniker for the first party this user-selectable option provides a simple, intuitive, yet-powerful mnemonic device to signal to the user how to return to the first call. The use of color-differentiated highlighting can further serve to underscore such functionality and purpose.

These teachings can be economically deployed and successfully employed with a variety of calling methodologies and technologies. These approaches are highly intuitive for most users and accordingly can be successfully utilized by most users with little or no training.

The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus (200) comprising:
a wireless transceiver (104);
a touch-screen display (118);
a control circuit (102) operably coupled to the touch-screen display (118) and the wireless transceiver (104) and configured to:
- during a call via the wireless transceiver (104) with a first party, permit (301) a user to establish a combined call via the wireless transceiver (104) to include a second party;
- during at least a part of a call-establishment process to establish a second call with the second party, display (302) via the touch-screen display (118):
a first user-selectable option (502, 801) to return to the call with the first party, wherein the first user selectable option (502, 801) includes an icon or moniker for the first party, which is coloured in a colour that contrasts with other proximal colours then presently displayed on the touch-screen display (118) in order to highlight the availability of the first user-selectable option (502, 801), and
a second user-selectable option (802) to combine the first party and the second party into the combined call; and
- on selection of the second-user selectable option (802), combine the first call and the second call as a conference call.

2. The apparatus of claim 1 further comprising:
a memory (110) having a contacts list stored therein; and
wherein the control circuit (102) is operably coupled to the memory (110) and is configured to access the contacts list to obtain the moniker to include with the displayed first user-selectable option (801).

3. A method at a control circuit (102) of an apparatus (200) comprising a wireless transceiver (104) and a touch-screen display (118), the method comprising:
during a call via the wireless transceiver (104) with a first party, permitting (301) a user to establish a combined call via the wireless transceiver (104) including a second party;
during at least a part of a call-establishment process to establish a second call with the second party, displaying (302) via the touch-screen display (118):
a first user-selectable option (502, 801) to return to the call with the first party, wherein the first user selectable option (502, 801) includes an icon or moniker for the first party, which is coloured in a colour that contrasts with other proximal colours then presently displayed on the touch-screen display (118) in order to highlight the availability of the first user-selectable option (502, 801), and
a second user-selectable option (802) to combine the first party and the second party into the combined call; and
on selection of the second user-selectable option (802), combining the first call and the second call as a conference call.

4. The method of claim 3, further comprising:
accessing a contacts list to obtain a moniker to include with the first displayed user-selectable option.

5. A non-transitory computer storage medium (110) having instructions stored therein, which instructions, when executed by a control unit (102) of an apparatus (200), cause the apparatus (200) to perform the method of claim 3 or claim 4.

## Patentansprüche

1. Einrichtung (200), Folgendes umfassend:
einen drahtlosen Sendeempfänger (104);
eine Berührungsbildschirmanzeige (118);
eine Steuerschaltung (102), die mit der Berührungsbildschirmanzeige (118) und dem drahtlosen Sendeempfänger (104) wirkgekoppelt ist, und für Folgendes konfiguriert ist:
- während eines Anrufs über den drahtlosen Sendeempfänger (104) mit einem ersten Teilnehmer, Ermöglichen (301), dass ein Benutzer einen kombinierten Anruf über den drahtlosen Sendeempfänger (104) aufbaut, um einen zweiten Teilnehmer einzuschließen;
- während wenigstens eines Teils eines Anrufaufbauprozesses, um einen zweiten Anruf mit dem zweiten Teilnehmer aufzubauen, Anzeigen (302) über die Berührungsbildschirmanzeige (118) von Folgendem:
eine erste von dem Benutzer auswählbare Option (502, 801), um zu dem Anruf mit dem ersten Teilnehmer zurückzukehren, wobei die erste von dem Benutzer auswählbare Option (502, 801) ein Symbol oder einen Moniker für den ersten Teilnehmer einschließt, das in einer Farbe eingefärbt, die mit anderen proximalen Farben kontrastiert, die dann gegenwärtig auf der Berührungsbildschirmanzeige (118) angezeigt werden, um die Verfügbarkeit der ersten von dem Benutzer auswählbaren Option (502, 801) und eine zweiten von dem Benutzer auswählbaren Option (802) hervorzuheben, um den ersten Teilnehmer und den zweiten Teilnehmer in dem kombinierten Anruf zu kombinieren; und
- bei Auswahl der zweiten von dem Benutzer auswählbaren Option (802), Kombinieren des ersten Anrufs und des zweiten Anrufs als ein Konferenzanruf.

2. Einrichtung nach Anspruch 1, ferner Folgendes umfassend:
einen Speicher (110) mit einer darin gespeicherten Kontaktliste; und
wobei die Steuerschaltung (102) mit dem Speicher (110) wirkgekoppelt ist, und konfiguriert ist, um auf die Kontaktliste zuzugreifen, um den Moniker zu erhalten, der mit der angezeigten ersten von dem Benutzer auswählbaren Option (801) eingeschlossen werden soll.

3. Verfahren an einem Steuerschaltkreis (102) einer Einrichtung (200), die einen drahtlosen Sendeempfänger (104) und eine Berührungsbildschirmanzeige (118) umfasst, wobei das Verfahren Folgendes umfasst:
während eines Anrufs über den drahtlosen Sendeempfänger (104) mit einer ersten Partei, Ermöglichen (301), dass ein Benutzer einen kombinierten Anruf über den drahtlosen Sendeempfänger (104) einschließlich eines zweiten Teilnehmers aufbaut;
während wenigstens eines Teils eines Anrufaufbauprozesses, um einen zweiten Anruf mit dem zweiten Teilnehmer aufzubauen, Anzeigen (302) über die Berührungsbildschirmanzeige (118) von Folgendem:
eine erste von dem Benutzer auswählbare Option (502, 801), um zu dem Anruf mit dem ersten Teilnehmer zurückzukehren, wobei die erste von dem Benutzer auswählbare Option (502, 801) ein Symbol oder einen Moniker für den ersten Teilnehmer einschließt, das in einer Farbe eingefärbt, die mit anderen proximalen Farben kontrastiert, die dann gegenwärtig auf der Berührungsbildschirmanzeige (118) angezeigt werden, um die Verfügbarkeit der ersten von dem Benutzer auswählbaren Option (502, 801) und eine zweiten von dem Benutzer auswählbaren Option (802) hervorzuheben, um den ersten Teilnehmer und den zweiten Teilnehmer in dem kombinierten Anruf zu kombinieren; und
bei Auswahl der zweiten von dem Benutzer auswählbaren Option (802), Kombinieren des ersten Anrufs und des zweiten Anrufs als ein Konferenzanruf.

4. Verfahren nach Anspruch 3, ferner Folgendes umfassend:
Zugreifen auf eine Kontaktliste, um einen Moniker zu erhalten, der in die erste angezeigte von dem Benutzer auswählbare Option eingeschlossen werden soll.

5. Nichtflüchtiges Computerspeichermedium (110) mit darin gespeicherten Anweisungen, wobei die Anweisungen, wenn sie durch eine Steuereinheit (102) einer Einrichtung (200) ausgeführt werden, die Einrichtung veranlassen, (200) das Verfahren nach Anspruch 3 oder 4 durchzuführen.

## Revendications

1. Appareil (200) comprenant :
un émetteur-récepteur sans fil (104) ;
un dispositif d'affichage à écran tactile (118) ;
un circuit de commande (102) couplé de manière fonctionnelle au dispositif d'affichage à écran tactile (118) et à l'émetteur-récepteur sans fil (104) et configuré pour :
- pendant un appel par l'intermédiaire de l'émetteur-récepteur sans fil (104) avec un premier correspondant, permettre (301) à un utilisateur d'établir un appel combiné par l'intermédiaire de l'émetteur-récepteur sans fil (104) de manière à inclure un second correspondant ;
- pendant au moins une partie d'un processus d'établissement d'appel visant à établir un second appel avec le second correspondant, afficher (302) par l'intermédiaire du dispositif d'affichage à écran tactile (118) :
une première option sélectionnable par l'utilisateur (502, 801) permettant de revenir à l'appel avec le premier correspondant, la première option sélectionnable par l'utilisateur (502, 801) comportant une icône ou un nom désignant le premier correspondant, qui est coloré(e) d'une couleur qui contraste avec d'autres couleurs proximales étant alors actuellement affichées sur le dispositif d'affichage à écran tactile (118) afin de faire ressortir la disponibilité de la première option sélectionnable par l'utilisateur (502, 801), et
une seconde option sélectionnable par l'utilisateur (802) permettant de combiner le premier correspondant et le second correspondant dans l'appel combiné ; et
- lors de la sélection de la seconde option sélectionnable par l'utilisateur (802), combiner le premier appel et le second appel en une audioconférence.

2. Appareil selon la revendication 1 comprenant en outre :
une mémoire (110) dans laquelle est stockée une liste de contacts ; et
dans lequel le circuit de commande (102) est couplé de manière fonctionnelle à la mémoire (110) et est configuré pour accéder à la liste de contacts pour obtenir le nom à inclure avec la première option sélectionnable par l'utilisateur (801) qui est affichée.

3. Procédé au niveau d'un circuit de commande (102) d'un appareil (200) comprenant un émetteur-récepteur sans fil (104) et un dispositif d'affichage à écran tactile (118), le procédé comprenant :
pendant un appel par l'intermédiaire de l'émetteur-récepteur sans fil (104) avec un premier correspondant, le fait de permettre (301) à un utilisateur d'établir un appel combiné par l'intermédiaire de l'émetteur-récepteur sans fil (104) qui comporte un second correspondant ;
pendant au moins une partie d'un processus d'établissement d'appel visant à établir un second appel avec le second correspondant, le fait d'afficher (302) par l'intermédiaire du dispositif d'affichage à écran tactile (118) :
une première option sélectionnable par l'utilisateur (502, 801) permettant de revenir à l'appel avec le premier correspondant, la première option sélectionnable par l'utilisateur (502, 801) comportant une icône ou un nom désignant le premier correspondant, qui est coloré(e) d'une couleur qui contraste avec d'autres couleurs proximales étant alors actuellement affichées sur le dispositif d'affichage à écran tactile (118) afin de faire ressortir la disponibilité de la première option sélectionnable par l'utilisateur (502, 801), et
une seconde option sélectionnable par l'utilisateur (802) permettant de combiner le premier correspondant et le second correspondant dans l'appel combiné ; et
lors de la sélection de la seconde option sélectionnable par l'utilisateur (802), la combinaison du premier appel et le second appel en une audioconférence.

4. Procédé selon la revendication 3, comprenant en outre :
la consultation d'une liste de contacts pour obtenir un nom à inclure avec la première option sélectionnable par l'utilisateur qui est affichée.

5. Support de stockage informatique non transitoire (110) dans lequel sont stockées des instructions, lesquelles instructions, lorsqu'elles sont exécutées par une unité de commande (102) d'un appareil (200), amènent l'appareil (200) à exécuter le procédé selon la revendication 3 ou la revendication 4.
